# EUROPÄISCHE PATENTSCHRIFT

(11) **EP 1 214 863 B1**
(45) Veröffentlichungstag und Bekanntmachung des Hinweises auf die Patenterteilung: **02.08.2006**
(21) Anmeldenummer: 00979370.4
(22) Anmeldetag: 18.09.2000
(51) Int. Cl.: H04Q 11/04

(54) **KOMMUNIKATIONSSYSTEM**
COMMUNICATIONS SYSTEM
SYSTEME DE TELECOMMUNICATION

(30) Priorität: 21.09.1999 DE 19945159
(43) Veröffentlichungstag der Anmeldung: 19.06.2002
(73) Patentinhaber: SIEMENS AKTIENGESELLSCHAFT, 80333 München (DE)
(72) Erfinder: WINKLER, Steffi, Lissi, 82131 Gauting (DE); EMMERINK, Antonius, 81671 München (DE); KLEIN, Egon, Franz, 82110 Germering (DE); WINDECKER, Rainer, 81739 München (DE)
(86) Internationale Anmeldenummer: PCT/DE2000/003239
(87) Internationale Veröffentlichungsnummer: WO 2001/022743

(56) Entgegenhaltungen:
- EP-A- 0 335 555
- EP-A- 0 939 576
- WO-A-97/16007

## Beschreibung

Die Erfindung betriff ein Verfahren und eine Anordnung zum Auf- und Abbau von Kommunikationsverbindungen gemäß dem Oberbegriff des Anspruchs 1 bzw. 5. Ein solches Verfahren bzw. eine solche Anordnung ist aus WO 97/16007 bekannt.

Wegen des steigenden Kommunikationsaufkommens bedingt durch zunehmende Anzahl der Kommunikationsteilnehmer, sowie durch steigende Anforderungen an die Menge der zu übertragenden Daten, werden an Vermittlungseinrichtungen, insbesondere an privaten Nebenstellenanlagen immer höhere Anforderungen hinsichtlich der Menge der zu übertragenden Daten je Kommunikationsverbindung und der Anzahl der miteinander verbindbaren Kommunikationsendgeräte gestellt. Aktuelle Einrichtungen basieren beispielsweise auf dem TDM-Verfahren (Time Division Multiplexing) bei dem Kommunikationsdaten unterschiedlicher Verbindungen in jeweils definierten Zeitschlitzen übertragen werden. Eine Verbindung unterschiedlicher Kommunikationspartner wird durch ein Koppelfeld hergestellt, welches gemäß einer Steuerinformation eingehende Zeitschlitze auf einer eingehenden Verbindung ausgehende Zeitschlitze einer ausgehenden Verbindung zuordnet. Solche Koppelfelder sind in der Regel fest dimensioniert und können lediglich eine definierte Anzahl von Verbindungen herstellen, was oft eine bedarfsgerechte Anpassung von Vermittlungsanlagen erschwert. Ein weiteres Problem solcher Einrichtungen besteht darin, daß die Zeitschlitze eine begrenzte Aufnahmefähigkeit für Daten aufweisen.

Die der Erfindung zugrunde liegende Aufgabe besteht darin, ein Verfahren und eine Anordnung zur Bereitstellung einer Kommunikationsverbindung anzugeben, welche ein hohes Maß an Flexibilität hinsichtlich der Anpassung an die Anzahl bereitzustellender Kommunikationsverbindungen, an das Kommunikationsaufkommen je Verbindung, sowie deren räumlicher Ausdehnung gewährleisten, dabei soll insbesondere sichergestellt werden, daß sich eine vermittlungstechnisch bedingte Zeitverzögerung bei der Behandlung einer Verbindung nicht nachteilig auswirkt.

Diese Aufgabe wird für das Verfahren gemäß den Merkmalen des Patentanspruches 1 und für die Anordnung gemäß den Merkmalen des Patentanspruches 5 gelöst. Weiterbildungen der Erfindung ergeben sich aus den abhängigen Ansprüchen.

Vorteilhaft wird bei dem erfindungsgemäßen Verfahren mittels des Callprocessings eine Verbindung über eine bereits bestehende feste Teilverbindung im Transportnetz aufgebaut, weil auf diese Weise ein ggf. zeitaufwendiger Verbindungsvorgang im Transportnetz zum aktuellen Zeitpunkt entfallen kann. Dieser Vorteil wird um so größer, je mehr Vermittlungsstationen im Transportnetz am Verbindungsaufbau einer Verbindung über verschiedene Teilverbindungsstrecken der Verbindung betroffen sind.

Besonders vorteilhaft wird das Callprocessing bei einer Weiterbildung des beschriebenen Verfahren in dezentralen Vermittlungseinrichtungen ausgeführt, weil dadurch eine große Redundanz im Transportnetz erzielbar ist, und für den Fall, daß mehrerer solcher Vermittlungseinrichtungen miteinander verbunden sind, zwischen denen fest etablierte Teilverbindungsstrecken eingerichtet sind, der Verbindungsaufbau im Transportnetz auch über mehrere dezentrale Vermittlungseinrichtungen genau so lange dauert, wie wenn vom Aufbau der Kommunikationsverbindungen lediglich zwei solcher dezentraler Vermittlungseinrichtungen betroffen wären. So wird sichergestellt, daß der Verbindungsaufbau zwischen unterschiedlichen Kommunikationsteilnehmern im Transportnetz näherungsweise die gleiche Zeitdauer erfordert, wobei es nebensächlich ist, wieviel dezentrale Vermittlungseinrichtungen real am Verbindungsaufbau beteiligt sind.

Besonders vorteilhaft wird eine solche Kommunikationsverbindung bei einer Weiterbildung des beschriebenen Verfahrens mit Hilfe von virtuellen Transportnetzverbindungen aufgebaut, weil diese hinsichtlich der Verbindungszeiten näherungsweise die gleichen Verbindungsaufbauzeiten bieten, wie verdrahtete Verbindungen, wobei jedoch die Transportnetztopologie sehr einfach gehalten werden und flexibel bedarfsgerecht ausgelegt sein kann. Dies führt zu einer erheblichen Reduktion des benötigten Verkabelungsaufwandes.

Besonders vorteilhaft ist eine Anordnung, bei der Kommunikationsverbindungen zwischen Kommunikationsteilnehmern über ein Transportnetz aufgebaut werden, welches durch ein Steuerungsnetz gesteuert wird, wobei im Transportnetz dezentrale Vermittlungseinrichtungen die Verbindungsaufgaben im Netz übernehmen. Wenn zwischen mindestens zwei solcher dezentraler Vermittlungseinrichtungen eine permanente Kommunikationsverbindung vorhanden ist, wird durch eine derartige Anordnung der Zeitaufwand für die Durchschaltung von Verbindungen im Transportnetz reduziert.

Permanent = Verbindungsaufbau entfällt Besonders vorteilhaft weist eine Weiterbildung der beschriebenen Anordnung eine permanente Verbindung in Form einer permanenten virtuellen Verbindung auf, weil solche permanenten virtuellen Verbindungen unabhängig von der aktuellen Netztopologie des Transportnetzes einrichtbar sind und keine Zeit für den Verbindungsaufbau verloren geht, da permanente Verbindungen nicht dynamisch nach Bedarf aufgebaut werden, sondern unabhängig davon lediglich einmal statisch eingerichtet werden müssen und dann immer zur Verfügung stehen.

Besonders vorteilhaft ist das Transportnetz in Form eines ATM-Netzes ausgeführt, weil für ATM-Netze bereits am Markt käuflich die unterschiedlichen Netzwerkkomponenten verfügbar sind, also der technische Aufwand für den Aufbau eines Transportnetzes beliebig gering ist und für ATM-Netze die Einrichtung von permanenten virtuellen Verbindungen bereits als Leistungsmerkmal vorliegt.

Besonders vorteilhaft werden bei einer Weiterbildung der beschriebenen Anordnung sämtliche im Transportnetz vorhandene dezentrale Vermittlungseinrichtungen über permanente virtuelle Verbindungen miteinander verbunden, weil auf diese Weise die Verbindungsaufbauzeit zwischen beliebigen dezentralen Vermittlungseinrichtungen über das Transportnetz näherungsweise konstant ist und es unabhängig ist, wieviel solcher dezentraler Vermittlungseinrichtungen am Aufbau der Kommunikationsverbindung über das Transportnetz beteiligt sind.

Im folgenden werden Ausführungsbeispiele der Erfindung anhand von Figuren weiter erläutert.
Figur 1 zeigt eine herkömmliche Kommunikationsanordnung,
Figur 2 zeigt ein Beispiel einer neuen Kommunikationsanordnung,
Figur 3 zeigt ein Beispiel eines Meldungsablaufs bei einem bekannten Vermittlungssystem.
Figur 4 zeigt ein Beispiel eines Meldungsablaufs unter Verwendung zeitschlitzbezogener Verbindungsinformationen für das Transportnetz.
Figur 5 zeigt eine Kommunikationsanordnung mit permanenten Verbindungen,
Figur 6 zeigt eine Kommunikationsanordnung mit Transportnetzverbindungen über ein öffentliches Netz,
Figur 7 zeigt eine komplexe Kommunikationsanordnung mit virtuellen Pfaden.

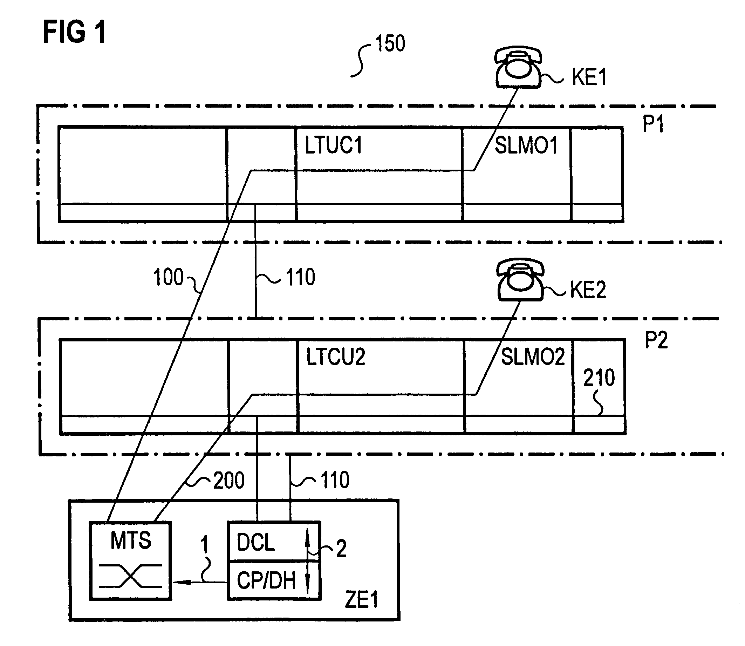

Figur 1 zeigt ein Beispiel einer bekannten Nebenstellenanlage 150 mit zwei peripheren Einrichtungen P1 und P2, an welche jeweils ein digital oder analog arbeitendes Kommunikationsendgerät KE1 und KE2 angeschlossen ist. Diese peripheren Einrichtungen P1 und P2 sind im gleichen räumlichen Bereich, wie die zentrale Einrichtung ZE1 untergebracht. Beispielsweise befinden sie sich im selben Raum oder im selben Kabinett mit ihr. Die Endgeräte belegen definierte Zeitschlitze eines PCM-Datenstromes (Pulse Code Modulation) mit Kommunikationsdaten. Die digitalen oder analogen Kommunikationsendgeräte KE1 und KE2 sind jeweils an Anschlußbaugruppen SLMO1 und SLMO2 angeschlossen, welche dem PCM-Datenstrom digitale Daten, die für die jeweiligen Endgeräte bestimmt sind, bzw. von den jeweiligen Endgeräten ausgehen, über per Signalisierung festgelegte Zeitschlitze zuführen, bzw. entnehmen. Diese PCM-Datenströme sind in Figur 1 mit 100 bzw. 200 bezeichnet. Weiterhin sind Signalisierungsverbindungen dargestellt, welche mit 110 bzw. 210 dargestellt sind. Es ist zu beachten, daß es sich hierbei lediglich um eine logische Darstellung und nicht um eine physikalische Darstellung handelt. In Wirklichkeit werden jedoch die Transportdaten und die Signalisierungdaten im gleichen Verbindungskabel übertragen.

Weiterhin sind hier periphere Einrichtungen P1 und P2, sowie Versorgungsbaugruppen LTUC1 und LTUC2 dargestellt, welche den Datenverkehr zu den Anschlußbaugruppen der jeweiligen dezentralen Einrichtungen regeln. Der peripheren Einrichtung P1 werden Signalisierungsdaten über die Leitung 110 und der peripheren Einrichtung P2 über die Signalisierungsleitung 210 zugeführt.

Wie hier deutlich erkennbar ist, werden bei dieser Anordnung sowohl die zu transportierenden Informationen, als auch die Signalisierungsinformationen einer zentralen Einrichtung ZE1 zugeführt. Hierbei werden von einer Meldungseinrichtung DCL Meldungen 2 gesammelt und verteilt, die zwischen der zentralen Einrichtung ZE1 und den peripheren Einrichtungen P1, P2 ausgetauscht werden. Das Callprozessing CP steuert den Auf-und Abbau von Verbindungen und bedient sich dazu unter anderem gerätespezifischer Schnittstellenfunktionen DH, die beispielsweise in Form von Programmodulen realisiert sind. Dabei werden Einstellbefehle 1 für das Koppelnetz MTS erzeugt. Diese Einstellbefehle geben im wesentlichen an, welcher Eingang des Koppelfeldes mit welchem Ausgang zu verbinden ist, um eine Kommunikationsverbindung bereitzustellen. Steuerungs-und Verbindungsfunktion werden also von einer einzigen räumlich integrierten Funktionseinheit des Kommunikationsnetzes wahrgenommen.

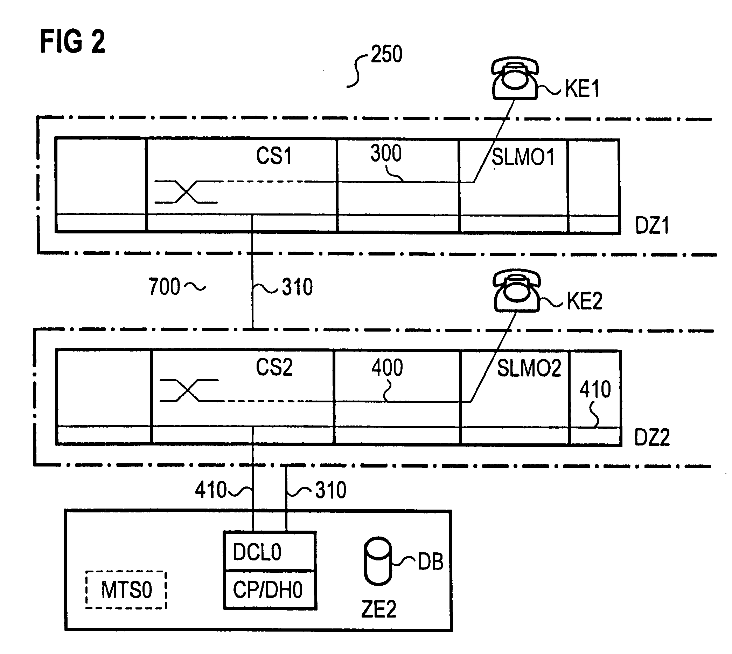

Figur 2 zeigt ein Beispiel einer flexiblen und leistungsfähigen Anordnung zum Aufbau von Kommunikationsverbindungen. Beispielsweise veranschaulicht diese Anordnung den Aufbau einer privaten Nebenstellenanlage 250.

Mit gleichlautenden Bezugszeichen in der Figur 2 sind gleiche Bestandteile der Einrichtung wie in Figur 1 bezeichnet. Beim Betrachten der Figur 2 fällt unmittelbar auf, daß hier ein separates Transportnetz 700 und ein separates Steuerungsnetz 310/410 vorhanden sind. Dieser Aufbau einer Vermittlungsanlage hat den Vorteil, daß für das Transportnetz bereits vorhanden Netze, wie öffentliche oder private Netze genutzt werden können. Lediglich das Steuerungsnetz muß hier zur zentralen Einrichtung ZE2 geführt werden.

Die digitalen oder analogen Kommunikationsendgeräte KE1 und KE2 sind hier so dargestellt, daß sie jeweils an Anschlußbaugruppen SLMO1 und SLMO2 angeschlossen sind. Ohne Beschränkung der Erfindung sind jedoch in einer solchen Anordnung 250 auch Endgeräte denkbar und integrierbar, welche direkt, unter Umgehung, bzw. ohne SLMO an das Transportnetz 700 anschließbar sind. Es sind also auch ATM-Endgeräte oder auch IP-basierende (Internet Protokoll) Endgeräte anschließbar.

Wie ferner erkannt werden kann, weisen die dezentralen Einrichtungen DZ1 und DZ2 jeweils dezentrale Vermittlungseinrichtungen CS1 und CS2 auf, die beispielsweise in Form von ATM-Zugangseinrichtungen ausgeführt sein können. Ebenso veranschaulicht die Darstellung, daß das Koppelfeld MTSO nicht mehr für Verbindungsaufgaben eingesetzt wird. Statt dessen übernimmt das Transportnetz die Verbindungsaufgaben.

Über die Steuerungsleitungen 410 und 310 wird bei dieser Anordnung hierzu lediglich für die jeweiligen dezentralen Vermittlungseinrichtungen CS1 und CS2 je mindestens eine Steuerungsinformation zum Aufbau der Kommunikationsverbindung bereitgestellt, die aus einer zeitschlitzbezogenen Steuerungsinformation abgeleitet wird. Ferner ist der Figur zu entnehmen, daß auf einer Datenstrecke 300 bzw. 400 eine Umwandlung von PCM-Daten in Zellendaten gemäß dem Standard des Transportnetztypes 700, wie beispielsweise ATM-Zellendaten, durchgeführt wird. Hierbei ist zu vermerken, daß die Verwendung eines ATM-Netzes als Transportnetz hier lediglich als Ausführungsbeispiel dient. Dafür kommen ebenfalls Ethernets, andere IP-Verbindungen oder sogar TDM-Verbindungen in Betracht. Die Auswahl ist abhängig vom beabsichtigten Einstatzzweck und erstreckt sich auf die gesamte Palette an verfügbaren Netzen sowohl im schmalbandigen, als auch im breitbandigen Bereich.

Bevorzugt wird auf den dezentralen Vermittlungseinrichtungen CS1 und CS2 ein transportnetzabhängiges Callprozessing durchgeführt, welches jedoch im wesentlichen auf Basic Call Funktionalität beschränkt ist. Leistungsmerkmale werden dabei durch die zentrale Steuerung ZE2 realisiert und bereitgestellt. Verbindungen zwischen den unterschiedlichen dezentralen Einrichtungen werden durch die zentrale Einrichtung ZE2 über Signalisierung gesteuert. Die Vorteile dieser Steuerungsanordnung bestehen darin, daß sie sowohl schmalband- als auch breitbandfähig ist. Ferner kann das Transportnetz sowohl auf öffentlichen, als auch auf privaten Netzen eingerichtet sein, oder auch auf einer Mischung aus beiden.

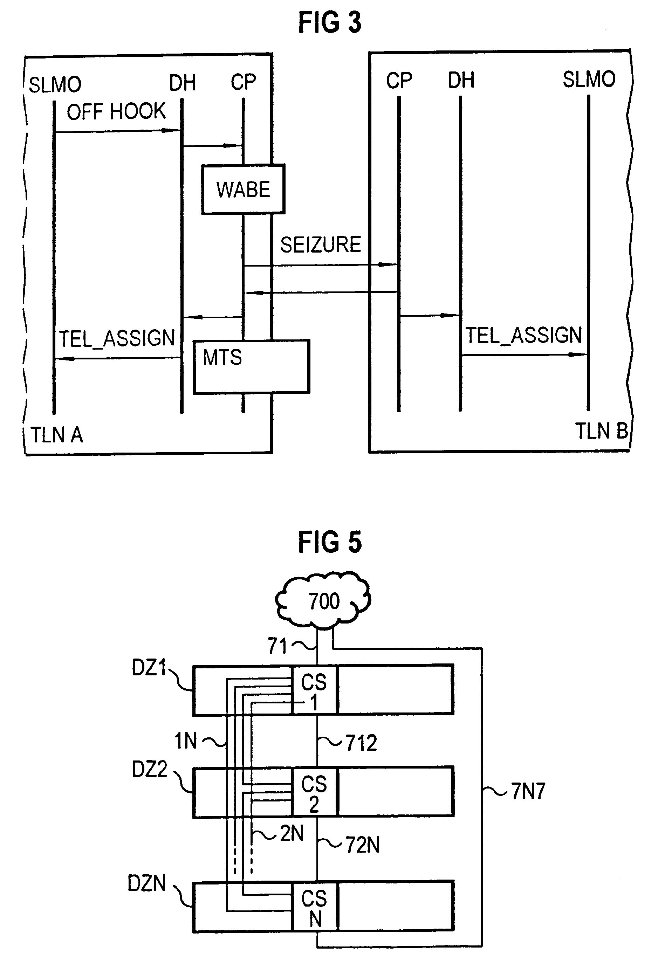

Figur 3 zeigt in vereinfachter Form beispielhaft einen Meldungsablauf eines herkömmlichen Kommunikationssystems zum Aufbau einer Verbindung zwischen zwei peripheren Einrichtungen, an welche das Endgerät eines Teilnehmers A, TLNA und das Endgerät eines Teilnehmers B, TLNB angeschlossen sind. Die zeitliche Abfolge der Meldungen, bzw. Steuerungungsnachrichten, ist von oben nach unten gegeben. Zunächst hebt der Teilnehmer A ab und generiert die Signalisierungsinformation OFF HOOK. Anschließend wird eine Wahl des gewünschten Kommunikationspartners durch Eingabe einer Wahlinformation durchgeführt, welche von einem gerätespezifischen Schnittstellenmodul DH an das Callprozessing CP des Teilnehmers A weitergegeben wird.

Die Wahlbewertung WABE der Wahlinformation führt dazu, daß eine Nachricht SEIZURE an das Callprozessing CP des Teilnehmers B weitergegeben wird. Ein dort zuständiges gerätespezifisches Schnittstellenmodul DH weist der Verbindung einen expliziten Zeitschlitz, bspw. ZS1 einer definierten PCM-Datenstrecke, bspw. PD1 zu und generiert die Steuerungsnachricht TSL_ASSIGN an die Anschlussbaugruppe SLMO1. Diese Steuerungsnachricht teilt der Anschlussbaugruppe SLMO1 den expliziten Zeitschlitz ZS1 und die festgelegte PCM-Datenstrecke PD1 mit, die für die Verbindung genutzt werden soll. Der explizite Zeitschlitz ZS1 in der PCM-Datenstrecke PD1 ist gültig für die Teilverbindung zwischen Anschlussbaugruppe SLMO1 und MTS. Ein zweiter expliziter Zeitschlitz ZS2 in einer zweiten explizit festgelegten PCM-Datenstrecke PD2 ist gültig für die Teilverbindung zwischen MTS und Anschlussbaugruppe SLMO2. Die Information ZS2 und PD2 wird der Anschlussbaugruppe SLMO2 wiederum in einer Steuerungsnachricht TSL ASSIGN mitgeteilt. In der Regel benutzen TDM-basierte private Nebenstellenanlagen zur physikalischen Verbindung einzelner Teilnehmer ein TDM-Koppelfeld MTS. Für dieses Koppelfeld wird ein Einstellbefehl PATH_CONMECT1 abgesetzt, der bewirkt, daß der Zeitschlitz ZS1 von PCM-Datenstrecke PD1 mit dem Zeitschlitz ZS2 der PCM-Datenstrecke PD2 verbunden wird. Damit sind die beiden Teilverbindungen zu einer durchgehenden Strecke zwischen SLMO1 und SLMO2 verbunden.

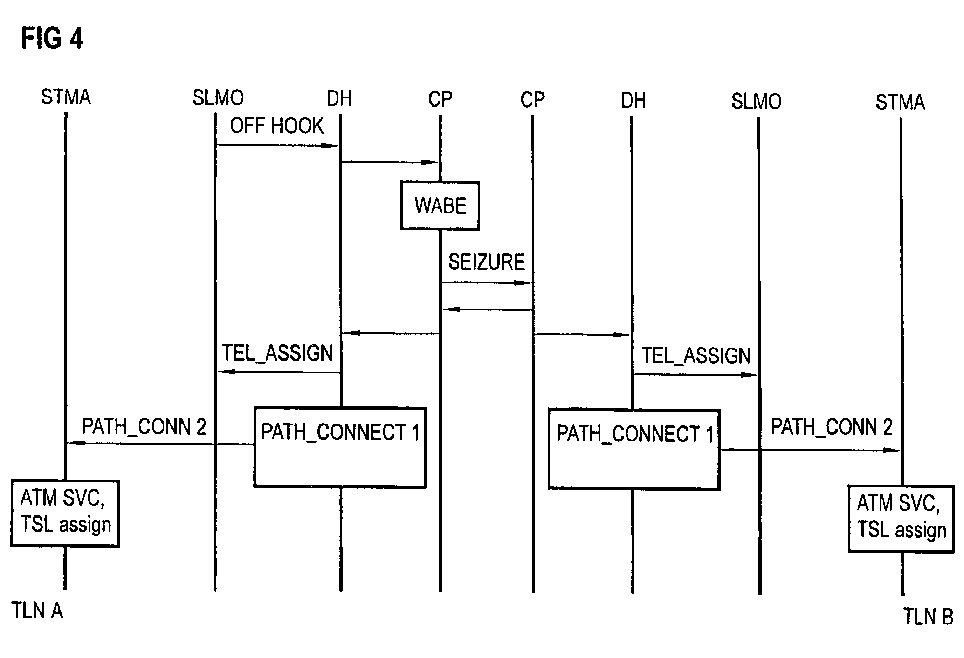

Figur 4 zeigt in vereinfachter Form beispielhaft einen Meldungsablauf zwischen zwei dezentralen Einrichtungen, an welche das Endgerät eines Teilnehmers A, TLNA und das Endgerät eines Teilnehmers B, TLNB angeschlossen sind. Als Transportnetz kommt hier beispielhaft ein ATM-Netz zum Einsatz. Die zeitliche Abfolge der Meldungen, bzw. Signalisierungsnachrichten, ist von oben nach unten gegeben. Eine Funktionseinheit STMA setzt die Zeitschlitze des PCM-Datenstroms in einen Zellenstrom von ATM-Zellen um. In Figur 2 ist eine solche Einrichtung jeweils in der dezentralen Vermittlungseinrichtung CS1, bzw. CS2 integriert und deswegen nicht separat dargestellt.

Der Ablauf unterscheidet sich von dem in Figur 3 dargestellten Ablauf erst ab dem Punkt, wo für das TDM-Koppelfeld der Einstellbefehl PATH_CONNECT1 abgesetzt wird. Statt einem Einstellbefehl PATH_CONNECT1 wird eine Steurungsnachricht PATH_CONN2 generiert, die an die dezentralen Vermittlungseinrichtungen gesendet wird. Die dezentralen Vermittlungseinrichtungen bauen daraufhin eine Verbindung im Transportnetz auf. Bei Einsatz eines ATM Transportnetzes wird beispielsweise durch ATM Signalisierungsverfahren eine ATMSVC aufgebaut (ATM Switched Virtual Connection).
Die Steuerungsnachricht PATH_CONN2 muß dazu die Zeitschlitz-und Datenstreckeninformationen ZS und PD enthalten, die beispielsweise direkt aus der Einstellmeldung PATH_CONNECT1 entnommen werden können. Weiterhin muß von der zentralen Steuereinrichtung lediglich die transportnetzabhängige Adresse der dezentralen Vermittlungseinrichtung angegeben werden, zu der die Verbindung aufgebaut werden soll. D.h. die Daten, die für die zentrale Steuerung als Information über das Transportnetz bereitgestellt werden müssen, beschränken sich auf die transportnetzabhängigen Adressen der jeweiligen dezentralen Vermittlungseinrichtungen. Die zentrale Steuereinrichtung ermittelt die erforderlichen Adressen wiederum aus der Zeitschlitz- und Datenstreckeninformation ZS und PD. Zuordungstabellen in einer zentralen Datenbasis DB regeln die Abbildung von Zeitschlitz/Datenstrecke zu dezentraler Vermittlungseinrichtung.

In der Steuerungsnachricht PATH_CONN2 können auch noch andere Informationen enthalten sein, und die Steuerungsnachricht PATH_CONNECT kann auch in mehreren spezifischeren Ausprägungen generiert werden. Sollen Verbindungen unterschiedlicher Bandbreiten aufgebaut werden, können in der Steuerungsnachricht PATH_CONN2 auch Informationen über die gewünschte Bandbreite enthalten sein. Alternativ kann die Bandbreiteninformation auch direkt zwischen Anschlussbaugruppe und Vermittlungseinrichtung ausgetauscht werden.

Haben die dezentralen Vermittlungseinrichtungen nach Erhalt der PATH_CONN2 Meldung eine Verbindung im Transportnetz 700 aufgebaut, werden dann die Nutzdaten darüber übertragen. Die Zuordnung von einem Nutzdatenstrom auf der Datenstrecke 300/400 zwischen Anschlussbaugruppe und dezentraler Einrichtung DZ zu einer Verbindung zwischen DZ1 und DZ2 erfolgt durch eine Abbildung von Zeitschlitzangabe ZS und PD zu Verbindungsidentifikator der Verbindung.
Dies bedeutet, daß trotz der möglicherweise komplizierten Abläufe bei einem Verbindungsaufbau über das Transportnetz von der zentralen Steuerung ZE2 lediglich diese Adressen an das Call Processing des Transportnetzes weitergegeben werden müssen, um eine Verbindung darüber herzustellen. Den Rest besorgt das transportnetzspezifische Call Processing.

Gemäß diesem Meldungsablauf wird der PATH_CONNECT Befehl also durch ein transportnetzspezifisches Callprozessing ersetzt. Um TDM-basierte Teilnehmer transportnetzunabhängig durch dezentrale Vermittlungseinrichtungen verbinden zu können, wird eine Konvertierung von Zeitschlitzen in Transporteinheiten benötigt. Dies geschieht in einer Konvertierungseinheit, wie beispielsweise STMA von der je dezentraler Einrichtung mindestens eine vorhanden ist und bevorzugt in den Weg der Nutzdaten eingeschleift wird. Zu diesem Zweck kann ein ATM-PCM-Gateway oder ein IP-PCM Gateway vorgesehen sein

Die Kommunikation der TDM-basierenden Teilnehmerbaugruppen mit der Konvertierungseinheit geschieht beispielsweise über Verbindungen auf einer Rückwandleiterplatte der jeweiligen dezentralen Einrichtung. Auf dieser Leiterplatte kann zu diesem Zweck ein alle Baugruppen miteinander verbindender Bus vorgesehen sein. Die Einstellbefehle für das Einschleifen der Konvertierungseinheit werden dazu bevorzugt von der dezentralen Vermittlungseinrichtung selbständig aus der PATH_CONN2 Meldung erzeugt.

Das Verfahren ist jedoch nicht auf dynamisch aufgebaute Wählverbindungen beschränkt, sondern kann sich ebenso einer ATMPVC bedienen (ATMPVC Permanent virtual connection). Die Informationen bezüglich der Adresse müssen dann ausgetauscht werden gegen Informationen, welche die Benutzung von Festverbindungen regeln. Weiterhin können auch andere Formen der Datenübertragung genutzt werden, wie z.B. IP Verbindungen.

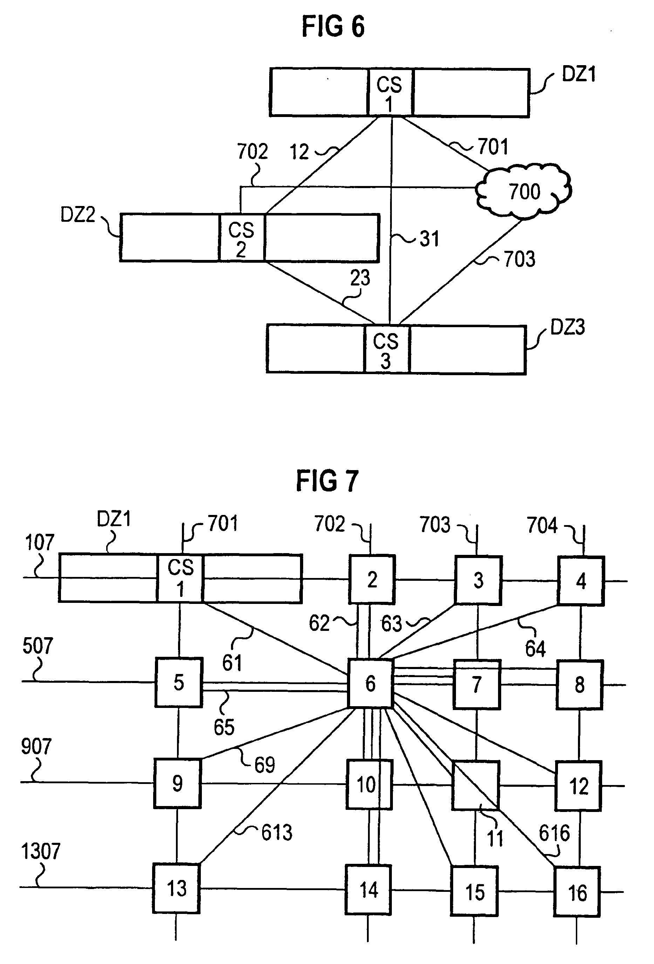

In Figur 5 ist das Beispiel eines durch ein Steuerungsnetz gesteuerten Kommunikationssystems mit einem Transportnetz 700 gezeigt. Bei diesen gezeigten Anordnungen sind die Bezugszeichen analog zu den Beschreibungen der übrigen Figuren verwendet. In vorliegendem Beispiel sind drei dezentrale Einrichtungen DZ1, DZ2 und DZN gezeigt, wobei zwischen DZ2 und DZN Punkte eingetragen sind, was bedeuten soll, daß es zwischen der dezentralen Einrichtung DZ2 und der dezentralen Einrichtung DZN beliebig viele solcher Einrichtungen geben kann, die ebenfalls Bestandteil einer solchen Kommunikationsanordnung sind.

Vom Transportnetz 700 gehen zu den dezentralen Vermittlungseinrichtungen CS1, CS2 und CSN Teilverbindungen 71, 712, 72N, die über eine weitere Verbindung 7N7 ins Transportnetz zurückgeführt werden. D.h. im Transportnetz liegt in diesem Fall eine serielle Verbindung der dezentralen Einrichtungen, genauer der dezentralen Vermittlungseinrichtungen dieser dezentralen Einrichtungen über das Transportnetz vor, die in Form einer Schleife geschlossen wird.

Wie weiter erkannt werden kann, bestehen zwischen den einzelnen dezentralen Vermittlungseinrichtungen CS1, CS2 und CSN Kommunikationsverbindungen über das Transportnetz, von denen hier zwei mit 1N und 2N bezeichnet sind. Dabei handelt es sich um die virtuellen Pfade zwischen der dezentralen Vermittlungseinrichtung CS1 und CSN, bzw. CS2 und CSN. Diese Darstellung veranschaulicht, daß durch den Einsatz von virtuellen Pfaden zwischen den dezentralen Vermittlungseinrichtungen eine sehr komplexe Struktur entstehen kann. Dies ist bereits aus der Darstellung der wenigen hier gezeigten virtuellen Verbindungen ersichtlich. Ebenfalls ist erkennbar, daß die Topologie des Transportnetzes im Vergleich dazu sehr einfach gehalten werden kann. Der Einsatz solcher permanenten virtuellen Pfade im Transportnetz hat den Vorteil, daß die Verbindungsaufbauzeiten von Kommunikationsverbindungen über das Transportnetz zwischen Kommunikationsteilnehmern an beliebigen dezentralen Einrichtungen näherungsweise konstant ist, weil durch die Einrichtung virtueller Pfade die Anzahl der am Verbindungsaufbau beteiligten Relaisstationen, in Form von dezentralen Vermittlungseinrichtungen, keine Rolle spielt. Das Transportnetz ist bevorzugt als ATM-Netz ausgeführt, weil für solche Netze bereits das standardisierte Leistungsmerkmal zur Einrichtung virtueller Pfade existiert. Vorteilhaft werden die virtuellen Pfade lediglich einmal beim Hochfahren der Kommunikationsanordnung initialisiert und im Transportnetz eingerichtet und bestehen dann während der Dauer des Betriebs dieser Anordnung. Sie werden lediglich durch das in den dezentralen Vermittlungseinrichtungen CS ausgeführte Callprocessing, das über das hier nicht dargestellte Steuerungsnetz gesteuert wird, mit aktuellen Kommunikationsverbindungen gemäß über das Steuerungsnetz versandten Steuerungsinformationen belegt.

Figur 6 zeigt eine weitere Kommunikationsanordnung bestehend aus drei dezentralen Einrichtungen DZ1 bis DZ3, in denen zentrale Vermittlungseinrichtungen CS1 bis CS3 angeordnet sind. Zwischen den dezentralen Vermittlungseinrichtungen bestehen virtuelle Kommunikationspfade 12, 23 und 31. In diesem Fall ist das Transportnetz 700 als öffentliches ATM-Netz ausgeführt. D.h. die virtuellen Pfade 701, 702 und 703 verlaufen über ein öffentliches Netz. In dem Fall, daß die dezentralen Vermittlungseinrichtungen CS1 bis CS3 über ein öffentliches Netz miteinander verbunden sind, und keine virtuellen Pfade dazwischen etabliert werden, kann es geschehen, daß bei einem Aufbau einer Verbindung die Verzögerungszeiten über das Transportnetz so groß werden, daß die standardisierten Verbindungsaufbauzeiten nicht mehr eingehalten werden können, die gemäß dem in einer solchen Kommunikationsanordnung angewandten Kommunikationsstandard definiert sind. Vorteilhaft wird also durch die Einrichtung von virtuellen Pfaden im Transportnetz, besonders bei öffentlichen Transportnetzen sichergestellt, daß die Verbindungsaufbauzeiten über das Transportnetz gering gehalten werden können.

Figur 7 zeigt eine komplexere Kommunikationsanordnung, bei der alle dezentralen Vermittlungseinrichtungen miteinander durch virtuelle Pfade verbunden sind. Zur Erleichterung der Übersichtlichkeit ist lediglich die dezentrale Vermittlungseinrichtung CS1 vollständig bezeichnet und die anderen dezentralen Vermittlungseinrichtungen sind der Reihenfolge nach mit Nummern von 2 bis 16 durchnumeriert.

Das Transportnetz liegt hier in Form einer matrixartigen Zeilen- und Spaltenstruktur vor, welche die einzelnen dezentralen Vermittlungseinrichtungen miteinander verbindet. Von diesen ist im vorliegenden Beispiel lediglich DZ1 dargestellt, weil sie im weiteren Zusammenhang nichts zum Verständnis der Figur beitragen. Das Transportnetz besteht also aus Spalten 701, 702, 703 und 704, die jeweils dezentrale Vermittlungseinrichtungen CS1, 5, 9, 13; 2, 6, 10, 14; 3, 7 11, 15 und 4, 8, 12, 16 miteinander verbinden. Zeilenweise sind durch das Transportnetz über 107 CS1, 2, 3, 4, über 507, 5, 6, 7, 8, über 907, 9, 10, 11, 12 und über 1307, 13, 14, 15, 16 miteinander verbunden. Bereits der Einsatz von 16 dezentralen Vermittlungseinrichtungen in einer Kommunikationsanordnung zieht also schon eine sehr komplexe Transportnetztopologie nach sich. Ungleich komplexer wird die Struktur jedoch, wenn virtuelle Pfade zwischen den einzelnen dezentralen Vermittlungseinrichtungen eingerichtet werden, um die Verbindungsaufbaudauer über die gesamte Kommunikationsanordnung zwischen Kommunikationsteilnehmern an beliebigen dezentralen Einrichtungen konstant zu halten. Gezeigt sind hier lediglich die virtuellen Pfade einer einzigen dezentralen Vermittlungseinrichtung, 6 zu allen anderen dezentralen Vermittlungseinrichtungen. Es ist dabei jedoch zu beachten, daß zwischen allen dezentralen Vermittlungseinrichtungen 1 bis 16 ein solcher sternförmiger virtueller Pfadaufbau besteht. Im einzelnen gehen von 6 zu den anderen dezentralen Vermittlungseinrichtungen virtuelle Pfade 61, 62, 63, 64, 616, 613, 69 und 65 aus, wobei jedoch zu beachten ist, daß zur Wahrung der Übersichtlichkeit der Darstellung nicht alle virtuellen Pfade in dieser Figur bezeichnet sind. Um eine kurze Verbindungsaufbaudauer von Kommunikationsverbindungen über diese Kommunikationsanordnung zwischen allen dezentralen Vermittlungseinrichtungen zu gewährleisten, ist es jedoch erforderlich, daß alle dezentralen Vermittlungseinrichtungen mit allen anderen dezentralen Vermittlungseinrichtungen über virtuelle Pfade verbunden sind.

Durch eine derartige Anordnung in Verbindung mit der Vorgehensweise bei der Etablierung einer Kommunikationsverbindung wird sichergestellt, daß die Verbindungsaufbauzeiten und die damit verbundenen Verzögerungen zwischen den einzelnen dezentralen Vermittlungseinrichtungen lediglich beim Hochlaufen einer derartigen Kommunikationsanordnung anfallen, bei dem die virtuellen Pfade über das ATM-Netz initialisiert werden, während sie beim aktuellen Aufbau einer Kommunikationsverbindung zwischen Kommunikationsteilnehmern, die an beliebige dezentrale Einrichtungen angeschlossen sind, kurz sind, weil diese über virtuelle Pfade verlaufen.

## Patentansprüche

1. Verfahren zum Auf- oder Abbau, bzw. Unterhalt einer Kommunikationsverbindung,
a) bei dem in einer zentralen Steuerungseinrichtung (ZE) eine Steuerungsinformation erzeugt wird, die geeignet ist, eine Verbindung über ein Koppelfeld (MTS) für Zeitschlitzverbindungen von PCM-Datenstrecken (100, 200) zu definieren,
b) bei dem diese Steuerungsinformation dazu verwendet wird, um in einem von einem Steuerungsnetz (310, 410) getrennten Transportnetz (700) zum Transport von Kommunikationsdaten über eine Kommunikationsverbindung ein transportnetzspezifisches Callprocessing (CP) zu steuern,
**dadurch gekennzeichnet, daß** durch das Callprocessing (CP) eine Kommunikationsverbindung für zu transportierende Nutzdaten aufgebaut wird, indem mindestens eine permanent im Transportnetz eingerichtete Teilverbindung verwendet wird.

2. Verfahren nach Anspruch 1,
bei dem das Callprocessing (CP) von dezentralen Vermittlungseinrichtungen (CS) des Transportnetzes (700) ausgeführt wird und die Kommunikationsverbindung über eine permanente Teilverbindung (12) zwischen zwei dezentralen Vermittlungseinrichtungen (CS1, CS2) aufgebaut wird.

3. Verfahren nach einem der vorangehenden Ansprüche,
bei dem die Kommunikationsverbindungen über mindestens eine permanente virtuelle Verbindung (12, 23, 31) aufgebaut wird.

4. Verfahren nach einem der vorangehenden Ansprüche,
bei dem die Kommunikationsverbindung über ein ATM-Transportnetz (700) aufgebaut wird.

5. Anordnung zum Auf- und/oder Abbau und/oder Unterhalt einer Kommunikationsverbindung mit
- einem Transportnetz (700) zur Bereitstellung einer Kommunikationsverbindung,
- einem vom Transportnetz (700) getrennten Steuerungsnetz (310, 410) zur Steuerung des Auf- und/oder Abbaus der Kommunikationsverbindung,
- ersten Mitteln zur Steuerung des Verbindungsauf- und/oder abbaues im Transportnetz (700) durch das Steuerungsnetz,
wobei diese Mittel räumlich vom Transportnetz getrennt angeordnet sind,
wobei das Transportnetz (700) mindestens zwei dezentrale Vermittlungseinrichtungen (CS) zur Bereitstellung einer Kommunikationsverbindung im Transportnetz aufweist,
**dadurch gekennzeichnet, daß** für zu transportierende Nutzdaten zwischen den dezentralen Vermittlungseinrichtungen (CS) mindestens eine permanente Kommunikationsverbindung über das Transportnetz (700) vorhanden ist.

6. Anordnung nach Anspruch 5,
bei dem die permanente Kommunikationsverbindung als permanente virtuelle Verbindung (701, 702, 703) ausgeführt ist.

7. Anordnung nach einem der Ansprüche 5 bis 6,
bei der das Transportnetz (700) als ATM-Netz ausgeführt ist.

8. Anordnung nach einem der Ansprüche 5 bis 7,
bei der zwischen allen dezentralen Vermittlungseinrichtungen (CS1,..., 16) permanente Kommunikationsverbindungen (61, 62,...) vorhanden sind.

## Claims

1. Method for setting up or clearing, as well as maintaining, a communications link,
a) in which control information is produced in a central control device (ZE), which control information is suitable for defining a link via a switching matrix (MTS) for time slot links for PCM data paths (100, 200),
b) in which this control information is used in order to control transport-network specific call processing (CP) in a transport network (700), which is separate from a control network (310, 410), for transporting communications data via a communications link,
**characterized in that** the call processing (CP) is used to set up a communications link for the user data to be transported by using at least one connection element which is set up permanently in the transport network.

2. Method according to claim 1,
in which the call processing (CP) is carried out by decentralized switching devices (CS) in the transport network (700), and the communications link is set up via a permanent connection element (12) between two decentralized switching devices (CS1, CS2).

3. Method according to one of the preceding claims,
in which the communications links are set up via at least one permanent virtual connection (12, 23, 31).

4. Method according to one of the preceding claims,
in which the communications link is set up via an ATM transport network (700).

5. Arrangement for setting up and/or clearing and/or maintaining a communications link having
- a transport network (700) for providing a communications link,
- a control network (310, 410), which is separate from the transport network (700), for controlling the setting up and/or clearing of the communications link,
- first means for controlling the setting up and/or clearing of connections in the transport network (700) by means of the control network, with these means being arranged physically separately from the transport network,
- the transport network (700) having at least two decentralized switching devices (CS) for providing a communications link in the transport network, **characterized in that** there is at least one permanent communications link via the transport network (700) between the decentralized switching devices (CS) for the user data to be transported.

6. Arrangement according to Claim 5,
in which the permanent communications link is in the form of a permanent virtual connection (701, 702, 703).

7. Arrangement according to one of Claims 5 and 6,
in which the transport network (700) is in the form of an ATM network.

8. Arrangement according to one of Claims 5 to 7,
in which there are permanent communications links (61, 62, ...) between all the decentralized switching devices (CS1,..., 16).

## Revendications

1. Procédé pour établir ou fermer resp. pour entretenir une connexion de communication, dans lequel
a) dans un équipement de commande central (ZE) est générée une information de commande qui est propre à définir une connexion via un champ de couplage (MTS) pour des connexions de créneaux temporels de trajets de données PCM (100, 200),
b) cette information de commande est utilisée pour commander un Call Processing (CP) spécifique au réseau de transport dans un réseau de transport (700) séparé d'un réseau de commande (310, 410) pour le transport de données de communication via une connexion de communication,
**caractérisé en ce qu'**est établie, par le Call Processing (CP), par utilisation d'au moins une connexion partielle mise en place en permanence dans le réseau de transport, une connexion de communication pour des données utiles à transporter.

2. Procédé selon la revendication 1, dans lequel le Call Processing (CP) est exécuté par des équipements de commutation décentralisés (CS) du réseau de transport (700) et la connexion de communication est établie via une connexion partielle permanente (12) entre deux équipements de commutation décentralisés (CS1, CS2).

3. Procédé selon l'une des revendications précédentes, dans lequel les connexions de communication sont établies via au moins une connexion virtuelle permanente (12, 23, 31).

4. Procédé selon l'une des revendications précédentes, dans lequel la connexion de communication est établie via un réseau de transport ATM (700).

5. Ensemble pour établir et/ou fermer et/ou entretenir une connexion de communication, comprenant
- un réseau de transport (700) pour fournir une connexion de communication,
- un réseau de commande (310, 410) séparé du réseau de transport (700) pour commander l'établissement et/ou la fermeture de la connexion de communication,
- des premiers moyens pour commander l'établissement et/ou la fermeture de la connexion dans le réseau de transport (700) par le réseau de commande, ces moyens étant situés de manière séparée du réseau de transport dans l'espace,
le réseau de transport (700) comportant au moins deux équipements de commutation décentralisés (CS) pour fournir une connexion de communication dans le réseau de transport,
**caractérisé en ce qu'**il existe, pour des données utiles à transporter, entre les équipements de commutation décentralisés (CS), au moins une connexion de communication permanente via le réseau de transport (700).

6. Ensemble selon la revendication 5, dans lequel la connexion de communication permanente est réalisée en tant que connexion virtuelle permanente (701, 702, 703).

7. Ensemble selon l'une des revendications 5 à 6, dans lequel le réseau de transport (700) est réalisé en tant que réseau ATM.

8. Ensemble selon l'une des revendications 5 à 7, dans lequel des connexions de communication permanentes (61, 62, ...) existent entre tous les équipements de commutation décentralisés (CS1, ..., 16).
